Europäisches Patentamt

European Patent Office

Office européen des brevets

(11) Publication number: **0 484 556 A1**

# EUROPEAN PATENT APPLICATION
## published in accordance with Art. 158(3) EPC

㉑ Application number: 91909719.6

㉒ Date of filing: 24.05.91

(86) International application number:
**PCT/JP91/00702**

㉘ International publication number:
**WO 91/17861 (28.11.91 91/27)**

㊱ Int. Cl.⁵: **B23Q 3/00, B23Q 7/00**

㉚ Priority: **24.05.90 JP 134535/90**

㊸ Date of publication of application:
**13.05.92 Bulletin 92/20**

㉃ Designated Contracting States:
**DE FR GB IT SE**

㉕ Applicant: **MATSUURA MACHINERY CORPORATION**
**No. 1 Aza Numa, Urushihara-cho 1**
**Fukui-shi Fukui-ken(JP)**

㉒ Inventor: **HORIKAWA, Yoshiharu, Matsuura Machinery**
**Corporation 1, Aza Numa Urushihara-cho 1**
**Fukui-shi Fukui 910-01(JP)**

㉔ Representative: **Rau, Manfred, Dr. Dipl.-Ing. et al**
**Rau & Schneck, Patentanwälte Königstrasse 2**
**W-8500 Nürnberg 1(DE)**

(54) **MACHINE TOOL.**

㊼ This invention, intended to prevent chips and cutting oil from sticking to the pallet, makes it possible to fix a clamping device for clamping the pallet for the work on the machine tool from the lower side so as to keep the work on the underside of the pallet.

FIG. 2

EP 0 484 556 A1

Rank Xerox (UK) Business Services
(3.08/2.18/2.0)

(Industrial Field of Utilization)

The present invention relates to a machine tool wherein the pallet with a workpiece fixed thereto is clamped by the clamping device for machining the workpiece.

(Prior Arts)

Such a machine tool is already widely utilized as provided with a pallet changer adapted to mount the pallet having a workpiece that is to be machined to the machine tool and to remove the pallet holding the workpiece that has been machined from the machine tool and the workpiece mounted on the pallet which is clamped by means of a clamping device may be machined.

According to a machine tool of a prior art, the pallet which is to be exchangeably attached to the machine tool by means of a pallet changer will be attached to a horizontal table or an index table.

In recent years, a machine tool is increasingly used for an extended period of time for machining in an unmanned operation, such that machining operation and pallet exchanging operation will be executed over an extended period time in an unmanned circumstance.

It is likely to occur that in the course of machining the workpiece will be splashed with the machining oil or chips may be generated due to machining. According to a machine tool of a prior art, since machining operation will be executed with the workpiece held on the upper surface of the workpiece holder or the workpiece held in horizontally inclined position due to the pallet being turned around, such that the chips or the cutting oil may be left on the pallet. If such a pallet is exchanged by means of the pallet changer, the chips or the cutting oil may be deposited on the transfer passage for the pallet or the magazine. As the result, the movable parts of the transfer passage and the magazine or the surface of the pallet clamping device of the machint tool on which the pallet is to be seated may be possibly damaged. As the consequence, the machine operated under an unmanned operation may be stopped or the accuracy of a workpiece may be lowered.

In order to solve this sort of problems, it has been proposed that a cover would be provided over said movalbe parts or an air blow apparatus would be provided. Consequently a large-scaled apparatus has to be used or a periodical cleaning will be required so that a lot ot time and effort may be caused. Nevertheless it is not completely possible to avoid deposition of the chips and the cutting oil on the pallet or to prevent troubles.

(Problems that the Invention is to Solve)

It is therefore an object of the present invention to provide such a machine tool as capable of eliminating the problems as above caused by a prior art and being operated over an extended period of time reliably and without troubles under an unmanned operation.

(Means of Solving the Problems)

The above object of the present invention has been solved by providing a machine tool including a clamping device adapted to clamp the pallet having a workpiece fixed thereto and a spindle head adapted to attach the cutting tool for machining the workpiece held by the clamping device, wherein said clamping device is so constructed as to be mounted to the machine tool from the lower side and the workpiece is held on the lower side of the pallet in the course of machining.

(Function and Effect)

According to the present invention, when the pallet is exchanged by means of the pallet changer, the pallet with the workpiece to be machined is inserted from the lower side and secured to the clamping device and the pallet with the workpiece that has been machined may be pulled downwardly from the clamping device. The pallet is held by the clamping device with the surface securing the workpiece facing downwardly and the workpiece fixed to the lower surface of the pallet may be machined by the cutting tool fixed to the spindle head of the machine tool.

Thus the chips generated in the course of machining will fall from the workpiece without adhering to the pallet and the cutting oil that has been splashed in the course of machining will fall downwardly from the lower surface of the pallet. Accordingly, no chips or cutting oil will fall down from the pallet during transportation of the pallet.

According to the present invention, the chips which may be generated in the course of machining in a machine tool or the cutting oil which will be used in the machine tool may be readily fall down without adhering to the pallet. Besides, such troubles as caused by the chips or the like falling on the transfer passage or a magazine at the time of exchanging a pallet could be avoided. Accordingly an unmanned operation may be reliably made possible over an extended period of time.

The present invention will now be explained in detail by referring to the embodiment illustrated in the accompanying drawings, wherein

Fig. 1 is the plan view of the apparatus employing the pallet storing device according to the present invention;

Fig. 2 is the right side elevation of Fig. 2;

Fig. 3 is the front view of the pallet holding a workpiece;

Fig. 4 is the fragmentary sectional view of a part of the upper end of the rotary column of the exchange arm; and

Fig. 5 is the sectional view showing the arm part.

(Embodiment)

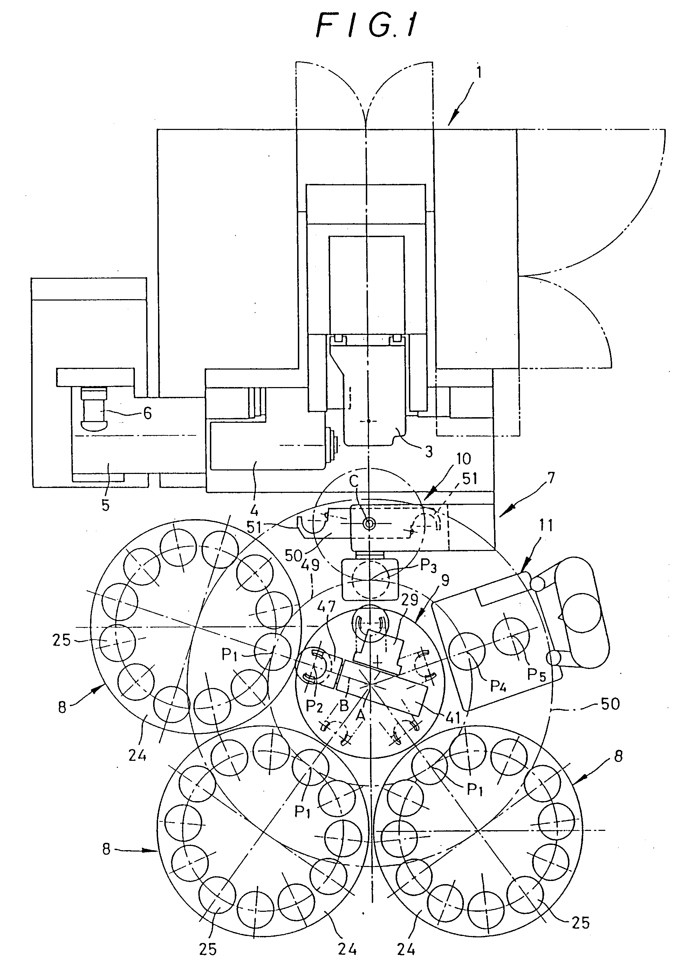

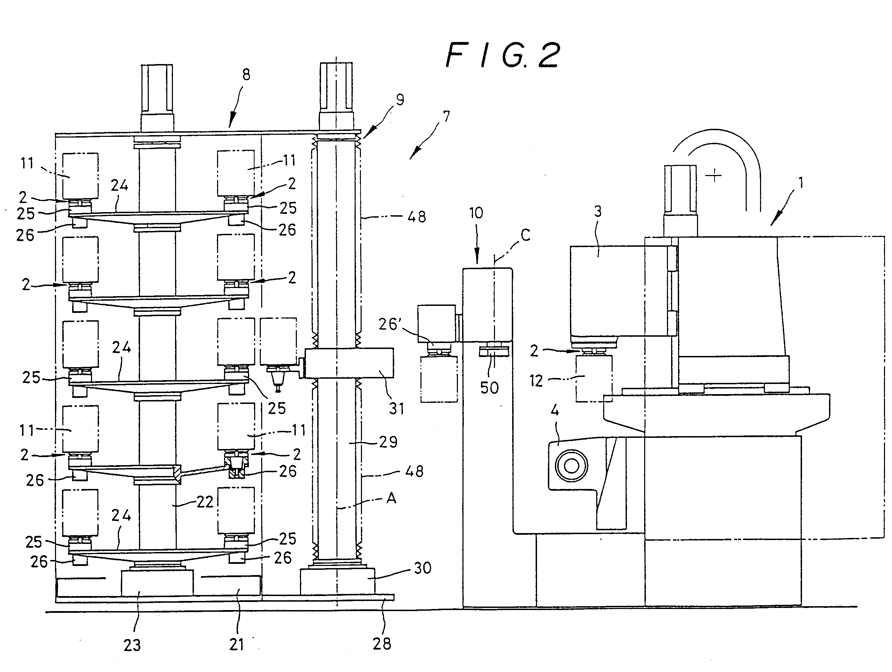

In Fig. 1 and Fig. 2, the machine tool 1 includes the clamping device 3 such as an indexing device adapted to attach the pallet 2 and the spindle head 4 adapted to attach the cutting tool. The clamping device 3 is provided with the attachment hole at the lower side surface enabling the pallet 2 to be attached from the lower side.

The spindle head 4 is disposed below the clamping device 3 and the axis of the spindle head 4 extends substantially in the horizontal direction and also leftwardly and rightwardly as viewed from the operator's side.

Below the spindle head 4, there is arranged a chip conveyor 5 for conveying the chips and the belt driven by the motor 6 is provided for the conveyor, so that the chips or the like generated in the course of machining may fall on the chip conveyor 5 to be transported outwardly and discharged.

In front of the machine tool 1, there is disposed the pallet changer 7.

The pallet changer 7 includes the pallet storing means 8, the exchanging arm means 9, the buffer means 10 and the pallet preparation means 11.

The pallet storing means 8 includes the base 21, the column 22 rotatably supported on the base 21, the drive means 23 supported on the base 21 and adapted to rotationally drive the column 22, and a plurality of (five of them in the illustrated example) tables carried by the column spacedly from each other in the vertical direction.

The drive means 23 comprises a motor and such a power transmission device as a gear set or a wrapping connector means like a belt.

Said plurality of tables 24 are fixed to a column 22 and rotatable together with the column. A plurality of tables 24 can be individually supported by each column sections 22 and the respective column sections 22 are individually rotatably driven by each table drive means. A plurality of table drive means are provided internally or externally of the column 22. The table drive means may be consisted of a motor and a set of gears or such a transmission means as a wrapping connector means or the like. As an alternative embodiment, forward or reversal rotation of the column imposed by the drive means 23 may be transmitted to the respective tables via such a power transmission menas as a set of gears or the like or such a transmission interupting means as a clutch or the like. It is also possible to turn the required table 24 only for a desired angular displacement by means of a clutch or the like.

On each of the tables 24, there are provided or plurality of pallet mounting sections 25 or twelve of such mounting sections 25 in the illustrated example along the circumference with the rotary center of the column 22 as the center. In general, each of the tables 24 has an identical configuration and the circumference of the same diameter along which the pallet mounting sections 26 are disposed. However, the talbes may have different size or the circumference of the different diameter and different configurations. In the illustrated embodiment, said tables 24 are circular in configuration. They are not, however, limited to such a configuration but may have a polygonal configuration defined by the number of the pallet mounting sections 25.

Each of the pallet mounting sections 25 is formed with a holding member 26 adapted to prevent the pallet 2 from sliding off.

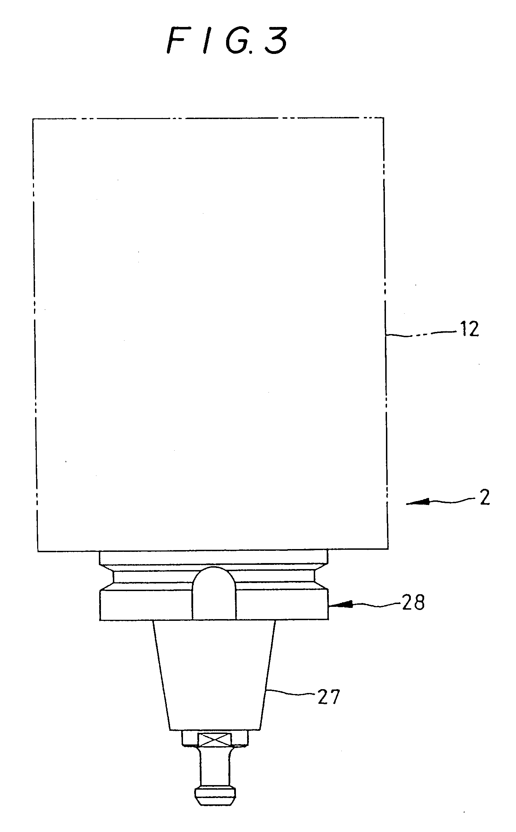

In case that such a holder 28 as shown in Fig. 3 having a tapered shaft 27 is utilized, the holder member 26 may be of such a known construction as adapted to lock the holder 28 after attached. In case that another configuration of the pallet 2 is used, the holder member 26 having a construction corresponding to the configuration of the pallet may be provided. A workpiece 12 to be machined is fixed to the pallet 2.

While one set of the pallet storing device 8 may be arranged for a machine tool, a plurality of such pallet storing devices, or three of them for example, may be arranged around the changing arm device 9 as shown in Fig. 1.

The pallet exchanging arm device 9 includes a base 28, a rotary column 29 supported on the base 28 rotationally around the rotary axis A, a drive means 30 adapted to rotate said rotary column 29 and an arm 31 supported on said rotary column 29 not rotatably relative to the column but vertically slidably relative thereto.

The drive means 30 may comprise a stepping motor adapted to directly drive the rotary column 29 or it may also be consisted of an angularly indexable means by a servo motor and such a transmission means as a set of gears or the like.

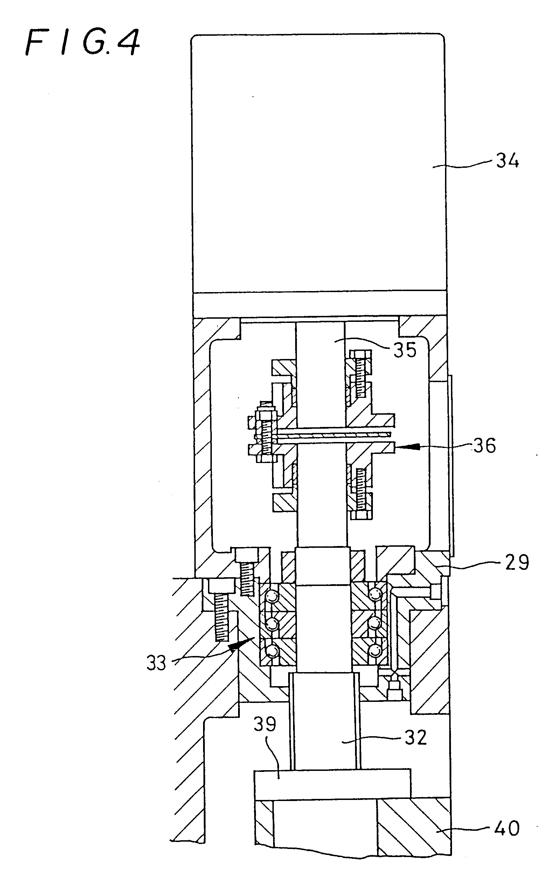

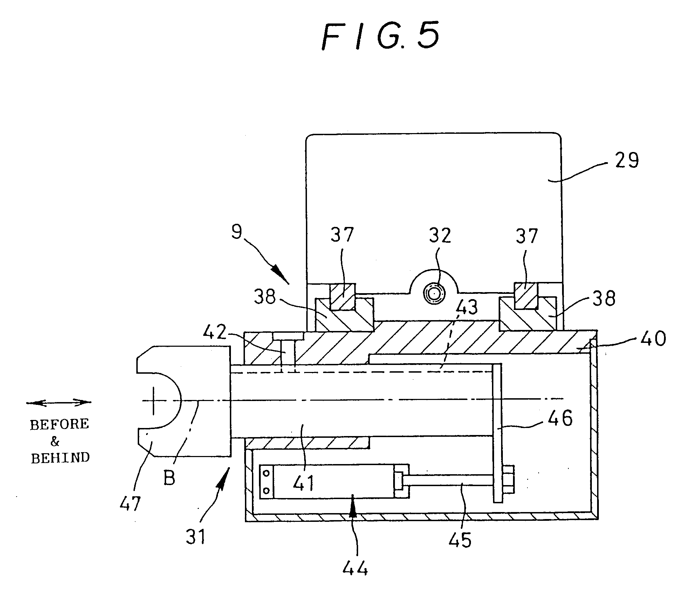

As shown in Fig. 4 and Fig. 5, a ball screw 32 is rotatably supported by the bearing 33 at the location displaced from the rotary axis A of the rotary column 29, said ball screw extending in parallel to the rotary axis A. The bearing 33 is attached to the casing of the rotary column 29. One end of the ball screw 32 is connected to the output shaft 35 of the motor 34 fixed to the upper end of the rotatry column 29 for example, by way of the coupling 36 and rotationally drive by the motor 34.

Rails 37 or two of the rails for example are fixed to the rotary column 29 and the guide members 38 or the sliding guides adapted to be slidably guided by the rails 37 for example or the guide rollers or the like which are adapted to roll on the rails 37 as guided may be guided by the rails 37, such that the arm 31 may be guided vertically from the lowermost table 24 to the uppermost table 24 of the pallet storing means 8.

A nut 39 is screwed to the ball screw 32 and the nut 39 is fixed to the casing 40 of the arm 31 whereby rotation of the ball screw 32 may be translated to the vertical motion of the arm 31.

The arm 31 includes a grasping arm 41 supported by the casing 40 which is vertically movable, in a manner as to be linearly slidable in the plane laterally crossing the rotary axis A. The grasping arm 41 is not rotatable relative to the casing 40. For this purpose, it is guided by engagement of the guide key 42 attached to the casing 40 and the key groove 43 provided at the grasping arm 41. A linear drive means 44 is provided at the casing 40. The linear drive means 44 is consisted of a hydraulic pressure cylinder in the case of an example shown in Fig. 5 and the piston rod 45 is secured to the connecting plate 46 fixed to the grasping arm 41. The drive means should not be limited to the example as above described but a suitable mechanism such as a set of gears, a link mechanism or the like may be utilized.

At the tip end of the grasping arm 41, there is provided a finger member 47 adapted to grasp the holder 28 shown in Fig. 3. The finger member in itself may be configured in a known manner.

Operation of the linear drive means 44 causes the grasping arm 41 to be reciprocated between the extended position in which the finger member 47 grasps the pallet 2 at the detaching position P1 (Fig. 1) of the table 24 of the pallet storing device 8 and the contracted position which corresponds to the transfer position P2 (Fig. 1) where the pallet 2 is taken out of the pallet storing device 8 and transported. The center line B of the arm 31 which extends through the center of the pallet 2 to be grasped by the finger member 47 and in the direction of the displacement of the grasping arm 41 is so arranged as to cross with the rotary axis A.

A bellow 48 is preferrably provided so as to prevent chips or dust from adhering to the ball screw 32 in the course of vertical movement of the arm 31.

If the pallet detaching position P1 of the respective pallet storing device 8 at which the pallet being inserted and detached by the finger member 47 of the arm 31 is disposed in a predetermined distance relatively along the circumference 48 having the center at the rotary axis A of the rotary column 29 of the pallet exchanging arm device 9, the extension and contraction stroke of the grasping arm 41 of the pallet exchanging arm device 9 relative to the respective pallet storing device 8 at the time of detaching the pallet may be constant. In this case, if the pallet storing devices 8 each having a table 24 of an identical size, the center of the pallet storing device will be located along the common circumference 50.

A clamping device 3 or an index table for example for detaching a pallet 2 as the pallet exchanging section of the machine tool 1 may be disposed at an appropriate position along the circumference 49 on which the pallet detaching position P1 is to be located. In this instance, it is convenient if the extension and contraction stroke of the grasping arm 41 of the pallet exchanging device 9 is made same when the pallet for the pallet storing device 8 and the pallet for the machine tool 1 are exchanged.

While the pallet 2 with the workpiece 11 held at the upper side is attached to the pallet attaching section 26 of the pallet storing device 8 from the upper side, the pallet 2 with the workpiece held on the lower surface is attached to the clamping device from the lower side. It is, accordingly, necessary that the top and the bottom of the pallet 2 in the machine tool 1 must be turned over as against in the pallet storing device 8. From this point of view, the finger member 47 sould be of such a construction as it is rotatably supported on the grasping arm 41 around the axis B and should be rotatable over 180 degrees by means of the rotary device which is rotated by the rotary actuator such as an electric motor by way of a transmission device or by hydraulic power.

A combination of the vertical motion of the arm 31, extension and contraction of the grasping arm 41, rotary motion of the finger member 47 relative to the grasping arm 41 and rotation of the arm 31 around the axis A enables pallets to be exchanged between the pallet storing device 8 and the machine tool 1.

As described above, the pallets 2 are not directly attached to or detached from the clamping device 3 of the machine tool 1. Instead, the pallet exchanging section 10 is provided as an indipendent device from the machine tool 1 as shown in Fig. 1 whereby the pallets are exchanged intially between the pallet storing device 8 and the pallet exchanging section 10 and then the pallets 2 are exchanged between the pallet exchanging section and the machine tool 1. The independent pallet exchanging section 10 is provided with the pallet attaching section 26, provided at the reception position P3 and the exchanging arm 50 for transforming the pallet. The pallet attaching section 26' is so formed as to have the same construction as that of the pallet attaching section 26 of the pallet storing device 8 and the pallet 2 may be inserted and clamped. The pallet attaching section 26' of the pallet exchanging section 10 is so formed that the pallet 2 with the workpiece held at the lower side is inserted from the lower side and clamped in the same manner as the clamping device 3 of the machine tool 1. Accordingly, the pallet attaching section 26' of the pallet exchanging section 10 is configured to the manner of turning over relative to the pallet attaching section 26 of the pallet storing device 8.

The exchanging arm 50 is rotatably supported in the substantially horizontal plane around the vertical rotary axis C and includes finger members 51 at the opposite ends. The finger member 51 is consisted of a finger member 51 having a well-known construction adapted to grasp or release pallets 2 by rotation around the rotary axis C of the exchanging arm 50. Rotation of the exchanging arm 50 allows the opposite finger member 51 to simultaneously grasp or release the pallets 2. As required, it is possible that the opposite finger members 51 separately allow the pallets to be grasped or released.

In the illustrated embodiment of the exchanging arm 50, a clockwise rotation of the arm causes the finger member 51 to simultaneously grasp the pallet at the reception position P3 and the pallet at the index table 3. When the exchanging arm 40 graps the pallet 2, it will be lowered and extract the pallet 2 respectively from the pallet exchanging section 10 and the index table 3. Then it is rotated by 180 degrees either in the clockwise or anti-clockwise direction to exchange pallets. Then, when the exchanging arm 50 is raised to attach the exchanged pallets to the pallet exchanging section 10 and the index table 3. Subsequently, the exchanging arm 50 is rotated by 90 degrees in the anti-clockwise direction and waits for the next action at the position shown in Fig. 1.

It is possible to so dispose the pallet preparation device 11 that the pallet reception position P4 is located along the circle 49 along which the pallet attaching and detaching position P1 of the pallet storing device 8 is disposed.

At the pallet preparing device 11, the workpiece on the pallet which has been machined is removed manually and a new workpiece to be machined is attached on an empty pallet. It is of course possible to automatically attach or detach workpieces to the pallets by means of a machine.

In the pallet preparation device 11, there are provided the pallet attaching section 26 and the holding member (not shown) are provided at a further preparation position P5 in addition to the reception position P4. In this way, pallet preparation work will be executed at another preparation position P5 and the prepared pallets will be set at the reception position P4 from the preparation position P5 manually or by means of a mechanical arm. In this way, the transport time spent by the exchanging arm device 12 may be prevented from being otherwise included in the preparation work.

At the time of exchanging the pallets, the arm 31 of the exchanging arm device 9 will assume vertical movement and rotation at the same time or sequentially and is caused to stop at the position opposed to the pallet attaching and detaching position P1 for the pallet storing device 8. Subsequently, the grasping arm 41 is extended so that the finger member 47 may grasp the holder 28 of the pallets 2. The arm 31 is caused to move upwards after it has grasped a pallet 2 and stop after it extracts a pallet 2 from the pallet attaching section 25. When the grasping arm 41 is contracted to be restored to the trasportation position P2, rotation and vertical downward movement of the arm 31 will cause the pallet to stop at the position corresponding to the reception position P3 of the pallet exchanging section 10 or the reception position P4 of the pallet preparation device 11. After said stoppage, the grasping arm 41 is extended to place the pallet above the specified pallet mounting section 25 while the arm 41 is lowered to cause the pallet 2 to be attached to the pallet mouting section 25. After mounting, said grasping arm 41 is contracted to wait for the next action at the transfer position P2.

If the pallet 2 is received from the pallet exchanging section 10 or the pallet preparation device 11 and attached to the pallet mounting section 25 of the specified pallet storing device 8, operation reversed to what has been described may be executed.

At each pallet storing device 8, the respective tables 24 will move the pallets 2 next to be treated to the detaching position P1 by taking advantage of the waiting time in which the exchanging arm device 9 is working.

In the description as above, although a small workpiece which is to take shorter machining time has described by way of an example, the present invention may be applied as well to such a workpiece which is assumed to take loger machining time.

## Claims

1. A machine tool including a clamping device adapted to clamp pallets with workpieces fixed thereto and a spindle head adapted to attach the cutting tool for machining the workpieces held by said clamping means, characterized in that said clamping device is so formed as to be capable of attaching the pallet from the lower side whereby the workpieces are held at the lower surfaces of the pallets in the course of machining.

# F I G.1

F I G. 2

EP 0 484 556 A1

# F I G. 3

# F I G.4

# F I G. 5

# INTERNATIONAL SEARCH REPORT

International Application No PCT/JP91/00702

**I. CLASSIFICATION OF SUBJECT MATTER** (if several classification symbols apply, indicate all)

According to International Patent Classification (IPC) or to both National Classification and IPC

Int. Cl$^5$ B23Q3/00, B23Q7/00

**II. FIELDS SEARCHED**

| Minimum Documentation Searched [7] | |
|---|---|
| Classification System | Classification Symbols |
| IPC | B23Q3/00, B23Q7/00 |

Documentation Searched other than Minimum Documentation
to the Extent that such Documents are Included in the Fields Searched

| | |
|---|---|
| Jitsuyo Shinan Koho | 1977 - 1991 |
| Kokai Jitsuyo Shinan Koho | 1973 - 1991 |

**III. DOCUMENTS CONSIDERED TO BE RELEVANT**

| Category* | Citation of Document, [11] with indication, where appropriate, of the relevant passages [12] | Relevant to Claim No. [13] |
|---|---|---|
| Y | JP, A, 62-88536 (Kitamura Machinery Co., Ltd.), April 23, 1987 (23. 04. 87) & EP, A, 219107 | 1 |
| Y | JP, A, 59-59334 (Matsuura Kikai Seisakusho, K.K.), April 5, 1984 (05. 04. 84), (Family: none) | 1 |
| Y | JP, A, 52-28789 (Takeo Itakura), March 3, 1977 (03. 03. 77), (Family: none) | 1 |

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| July 19, 1991 (19. 07. 91) | August 19, 1991 (19. 08. 91) |
| International Searching Authority | Signature of Authorized Officer |
| Japanese Patent Office | |

Form PCT/ISA/210 (second sheet) (January 1985)